(19) Europäisches Patentamt
European Patent Office
Office européen des brevets

(11) **EP 4 393 621 A1**

(12) **EUROPÄISCHE PATENTANMELDUNG**

(43) Veröffentlichungstag:
**03.07.2024 Patentblatt 2024/27**

(21) Anmeldenummer: 23214162.2

(22) Anmeldetag: **05.12.2023**

(51) Internationale Patentklassifikation (IPC):
**B23B 31/117** (2006.01) **B23Q 17/09** (2006.01)

(52) Gemeinsame Patentklassifikation (CPC):
**B23B 31/117; B23Q 17/0952; B23B 2260/128**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **20.12.2022 DE 102022134045**

(71) Anmelder: **Haimer GmbH**
**86568 Hollenbach-Igenhausen (DE)**

(72) Erfinder:
• **Sarikaya, Erkut**
  **64319 Pfungstadt (DE)**
• **Morozov, Roman**
  **71563 Affalterbach (DE)**
• **Weigold, Matthias**
  **69493 Hirschberg (DE)**

(54) **VERFAHREN UND VORRICHTUNG ZUR ERMITTLUNG EINES DREHSCHLUPFES EINES REIBSCHLÜSSIG IN EINEM WERKZEUGHALTER AUFGENOMMENEN WERKZEUGS**

(57) Die Erfindung betrifft ein Verfahren und eine Vorrichtung zur Ermittlung eines Drehschlupfes eines reibschlüssig in einem Werkzeughalter 4 aufgenommenen Werkzeugs 6.

Durch Auswertung einer Phase und/oder einer Periodenlänge eines periodischen Prozesssignals des Werkzeugs 6 wird ein Drehschlupf eines reibschlüssig in dem Werkzeughalter 4 aufgenommenen Werkzeugs 6 ermittelt.

FIG 1a
FIG 1b
FIG 1c

EP 4 393 621 A1

**Beschreibung**

Die Erfindung betrifft ein Verfahren und eine Vorrichtung zur Ermittlung eines Drehschlupfes eines reibschlüssig in einem Werkzeughalter aufgenommenen Werkzeugs, wie beispielsweise eines Schaftfräsers in einem Spannfutter bei einer Zerspanung insbesondere mit geometrisch bestimmter Schneide.

Das Zerspanen von Werkstoffen ist ein Teilgebiet der Fertigungstechnik und befasst sich mit der Bearbeitung von Werkstücken aus bestimmten, gegebenenfalls schwer zerspanbaren, Werkstoffen, wie beispielsweise Titanlegierungen, mithilfe von Werkzeugmaschinen.

Es ist bekannt, dass während der Zerspanung von Werkstücken, insbesondere solchen aus schwer zerspanbaren Werkstoffen, axialer Schlupf - und in Folge dessen - Werkzeugauszug auftreten kann, welcher zu Qualitätseinbußen bei gefertigten Teilen - oder sogar zu Werkzeugbruch, wie ein Bruch des erwähnten Schaftfräsers, führen kann.

Das Auftreten von Werkzeugauszug lässt sich theoretisch auf die Entstehung von axialem Schlupf bei reibkraftschlüssigen Werkzeug-Werkzeughalter-Verbindung zurückführen. Dies geschieht infolge eines belastungsabhängigen Spannungsabfalls an einer Pressfuge an der Welle-Nabe- bzw. Werkzeug-Werkzeughalter-Verbindung, sodass die Verbindung geschwächt und eine relative Gleitbewegung zwischen Welle-Nabe bzw. Werkzeug-Werkzeughalter ermöglicht wird.

Solche Gleitbewegungen - in axialer Richtung - mögen im Folgenden vereinfacht und anschaulich als axialer Schlupf oder Auszug, solche - in Umfangsrichtung - als Drehschlupf bezeichnet werden.

Dementsprechend zielen bestehende Lösungen zur Verhinderung von Schlupf und Werkzeugauszug bei reibschlüssig in Werkzeughalter aufgenommenen Werkzeugen darauf ab, entweder den Reibschluss zwischen Werkzeug und Werkzeughalter zu verbessern, wie beispielsweise durch Laser induziertes Aufrauen der Werkzeugschaftoberfläche (, wodurch ein Haftbeiwert an der Fügefläche steigt und Schlupf maßgeblich reduziert wird,) oder die Werkzeug-Werkzeughalter-Verbindung durch einen zusätzlichen Formschluss zu unterstützen, wie beispielsweise bei "Safe-Lock" (durch Sperrelemente).

Letztere "formschluss-unterstützte" Lösungen können deswegen grundlegend nachteilhaft sein, weil eine überbestimmte Verbindung von Werkzeug und Werkzeughalter erzeugt wird, keine genaue mathematische Beschreibung des Werkzeug-Werkzeughalter-Systems mehr möglich ist und damit auch keine Vorhersagen zum mechanischen Verhalten der Bauteile gemacht werden können. Beide erwähnten Lösungsansätze, d.h. Verbesserung des Reibschlusses und Unterstützung durch zusätzlichen Formschluss, erfordern zudem konstruktive Maßnahmen und erhöhen damit Werkzeug- bzw. Fertigungskosten.

Es ist Aufgabe der Erfindung, eine Lösung bereitzustellen, mittels welcher Werkzeugauszug ohne solche Nachteile, wie im Stand der Technik, erkannt und/oder verhindert und/oder kompensiert werden kann.

Diese Aufgabe wird gelöst durch ein Verfahren und eine Vorrichtung zur Ermittlung eines Drehschlupfes eines reibschlüssig in einem Werkzeughalter aufgenommenen Werkzeugs mit den Merkmalen des jeweiligen unabhängigen Anspruchs.

Vorteilhafte Weiterbildungen der Erfindung sind Gegenstand abhängiger Ansprüche sowie der nachfolgenden Beschreibung und beziehen sich sowohl auf erfindungsgemäße Verfahren wie auch auf die erfindungsgemäße Vorrichtung.

Gegebenenfalls verwendete Begriffe, wie oben, unten, vorne, hinten, links oder rechts sind - soweit nicht anders explizit definiert - nach üblichem Verständnis - auch in Ansehung der vorliegenden Figuren - zu verstehen. Begriffe, wie radial und axial, sind, soweit verwendet und nicht anders explizit definiert, in Bezug auf Mittel- bzw. Symmetrieachsen hier beschriebener Bauteile/Komponenten - auch in Ansehung der vorliegenden Figuren - zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Bei dem **Verfahren** zur Ermittlung eines Drehschlupfes eines reibschlüssig in einem Werkzeughalter aufgenommenen Werkzeugs ist vorgesehen, durch Auswertung einer Phase und/oder einer Periodenlänge eines periodischen Prozesssignals des Werkzeugs einen Drehschlupf eines reibschlüssig in dem Werkzeughalter aufgenommenen Werkzeugs zu ermitteln.

Dabei meint "Prozesssignal" des Werkzeugs ein während eines (Bearbeitungs-)Prozesses des Werkzeugs erfassbares, diesen Prozess repräsentierendes Signal, beispielsweise einen Spindelstrom der Werkzeugmaschinen bei einer Werkstückbearbeitung - oder ein durch eine Sensorik am Werkzeug, an dem Werkzeughalter oder an der Werkzeugmaschine erzeugbares, diesen Prozess repräsentierendes Signal, beispielsweise eine Belastung auf das Werkzeug.

Auch meint "periodisch", dass sich in der Periodizität bzw. durch die Periodizität des "periodischen" Prozesssignals ein - bei dem Prozess periodisch (zeitlich) wiederkehrend - immer wieder auftretendes Ereignis wiederspiegelt.

Ein solches periodisch im Prozess immer wieder auftretendes Ereignis kann beispielsweise ein Zahneingriff des Zerspanwerkzeugs, wie eines Fräswerkzeugs, bei Zerspanung eines Werkstücks sein, welcher sich beispielsweise in dem Spindelstrom oder der Belastung, beispielsweise einem Kraftsignal, einem Beschleunigungssignal und/oder einem Schwingungssignal - als das erfindungsseitig nutzbare periodische Prozesssignal - erkennen lässt.

Der erfindungsseitig vorgeschlagenen Lösung, um Werkzeugauszug zu erkennen und/oder zu verhindern und/oder zu kompensieren, liegt zunächst die Erkenntnis zugrunde, dass Ursache für den Werkzeugauszug ist, dass sich axialer Schlupf reibkraftschlüssiger Werkzeug-Werkzeughalter-Verbindungen unter umlaufender Belastung (, wie in einem (Bearbeitungs-)Prozess eines Werkstücks, beispielsweise Zerspanen eines Werkstücks) mit einer Verdrehung, d.h. dem Drehschlupf, überlagert - und somit eine schraubenförmige Bewegungsform/Gleitbewegung (des Werkzeugs im Werkzeughalter) entsteht.

Vereinfacht ausgedrückt, axialer Schlupf und Drehschlupf treten immer gemeinsam auf.

Lässt sich so Drehschlupf (bei Belastung bzw. im Prozess) erkennen, kann daraus auch auf vorhandenen axialen Schlupf und so in Folge Werkzeugauszug geschlossen werden.

Korrelative Zusammenhänge zwischen Drehschlupf und axialem Schlupf können so zudem auch eine quantitative Ermittlung eines Werkzeugauszugs, d.h. vereinfacht und anschaulich einer Werkzeug-Auszugslänge, ermöglichen. Beispielsweise könnte so - bei bekanntem (Werkzeug-)Auszugsdrallwinkel - aus dem Drehschlupf der axiale Schlupf bzw. der Werkzeugauszug/die Werkzeug-Auszugslänge ermittelt werden.

Die Erkennung von Drehschlupf erfolgt - anschaulich ausgedrückt - erfindungsseitig datengetrieben, anhand eines periodischen Prozesssignals des Werkzeugs.

Zentral sind hierbei die periodischen Eigenschaften eines solchen Prozesssignals, wie - erfindungsseitig genutzt - dessen Phase und/oder Periodenlänge. Hier wurde erkannt, dass sich die Phase bzw. dessen Phasenlage und/oder die Periodenlänge eines periodischen Prozesssignals sich - bei Auftreten eines Schlupfes bzw. eines Drehschlupfes - ändern.

Änderungen können durch Vergleich (mit, insbesondere erzeugten, "idealen" (d.h. "(dreh-)schlupffreien")), Referenzsignalen) ermittelt - und so Drehschlupf erkannt werden.

Anschaulich ausgedrückt, der Drehschlupf wird sich in den Schwingungseigenschaften des periodischen Prozesssignals wiederspiegeln bzw. wird zu einer Änderung bei den genannten Eigenschaften, nämlich bei der Phase bzw. Phasenlage und/oder Periodendauer/-länge, führen.

Anders und mathematisch ausgedrückt, der Drehschlupf führt zu einer zeitlich abhängigen Phasenlage bei der Ereignisfrequenz.

Die zeitlich abhängige Phasenlage (bei der Ereignisfrequenz) kann beispielsweise dadurch ermittelt bzw. berechnet werden, dass das periodische Prozesssignal bzw. dessen Phase/Phasenlage mit einem, beispielsweise künstlich erzeugten, insbesondere "idealen", Referenzsignal bzw. dessen Phasen/Phasenlage verglichen wird. Entsprechendes gilt auch für die Drehschlupf induzierte Periodenlänge.

Vergleiche von Periodenlängen und/oder die Analyse der Phasenverschiebung - in dem periodischen Prozesssignal selbst - mögen hier vereinfacht auch ausreichen.

Anders ausgedrückt, Drehschlupf (während des Prozesses) wird eine - analysierbare - Veränderung der Periodenlänge und/oder eine - analysierbare - Phasenverschiebung in dem periodischen Prozesssignal verursachen.

Eine datengetriebene Analyse der Phase und/oder der Periodenlänge des periodischen Prozesssignals erkennt bzw. liefert so den Drehschlupf eines reibschlüssig in dem Werkzeughalter aufgenommenen Werkzeugs. Wird so Drehschlupf erkannt, liegt auch axialer Schlupf und Werkzeugauszug vor. Über entsprechendes Monitoring des Drehschlupfes kann der entstandene Werkzeugauszug kompensiert und/oder nach entsprechender Anpassung der Prozessparameter weiterer Werkzeugauszug verhindert werden.

Gleiches gilt für Werkzeuge mit definierter Winkellage der Schneiden. Bei auftretendem Drehschlupf kann der Drehschlupfwinkel bestimmt und durch geeignete Maßnahmen kompensiert und/oder weiterer Drehschlupf verhindert werden.

Der datengetriebene Ansatz erspart bei der Vermeidung des Werkzeugauszugs kostspielige Konstruktivmaßnahmen (vgl. obige erste und zweite Lösungsansätze im Stand der Technik, d.h. Verbesserung des Reibschlusses und Unterstützung durch zusätzlichen Formschluss) und bietet eine universellere Lösung an, denn es ist eine Überwachung bzw. Kontrolle unabhängig von der Ausgestaltung der Werkzeug-Werkzeughalter-Verbindung möglich.

Die Anforderungen an die Umsetzung sind niedrig, es muss lediglich ein periodisches Prozesssignal vorliegen bzw. erfasst werden (, was gegebenenfalls schon - wie im Falle des Spindelstroms - ohne zusätzliche Sensorik vorhanden sein kann), anhand dessen ein (werkzeugtypisches) periodisch immer wieder auftretendes Ereignis (z.B. der Zahneingriff bzw. die Zahneingriffsfrequenz) erkennbar ist.

Außerdem ist die analytische Methode stabil gegen Störungen und Rauschen, weil diese Signalanteile beispielsweise durch einen Bandpass gefiltert werden. Aufgrund der Echtzeitfähigkeit ist potenziell eine vollständige Werkzeugauszugskompensation denkbar.

Zweckmäßig ist es so insbesondere, wenn das periodische Prozesssignal ein Spindelstrom ist, da hierbei maschineninterne Daten reichen und keine zusätzliche Messvorrichtung bzw. Sensorik erforderlich ist. Auch kann das periodische Prozesssignal ein Kraftsignal, ein Beschleunigungssignal und/oder ein akustisches oder anders geartetes Schwingungssignal sein -, was sich so durch eine entsprechende Sensorik (am Werkzeug, Werkzeughalter und/oder an der Werkzeugmaschine/Spindel) bewerkstelligen lässt.

Weiterbildend kann auch vorgesehen sein, dass das Werkzeug ein Zerspanwerkzeug, insbesondere ein Fräswerkzeug, ein Drehwerkzeug, ein Schleifwerkzeug oder ein Bohrwerkzeug, insbesondere ein Schaftfräser, und/oder der Werkzeughalter ein Spannfutter, insbesondere ein Schrumpffutter, ein Spannzangenfutter, ein Hydrodehnspannfutter oder ein HG-Futter, ist.

Ferner ist es zweckmäßig, wenn das periodische Prozesssignal gefiltert, geglättet, standardisiert und/oder ein Trend des periodischen Prozesssignals eliminiert wird, um so einen Amplitudenverlauf des periodischen Prozesssignals weitestgehend unabhängig von Prozessparametern zu machen. Vereinfacht bzw. anschaulich gesagt, Fehlereinflüsse (über die Zeit) werden aus dem periodischen Prozesssignal herausgerechnet. Dies kann insbesondere bei späteren Analysen des Schlupfverhaltens der Werkzeug-Werkzeughalter-Verbindung und/oder deren Optimierung vorteilhaft sein.

Insbesondere kann weiterbildend auch vorgesehen sein, dass das periodische Prozesssignal mit einem, insbesondere künstlich erzeugten, periodischen Referenzsignal verglichen wird.

Dabei ist es zweckmäßig (für den Vergleich), wenn ein in dem periodischen Prozesssignal periodisch wiederkehrendes Ereignis auch als das periodisch wiederkehrende Ereignis in das, insbesondere künstlich erzeugte, periodische Referenzsignal eingerechnet wird.

Auch kann weiterbildend vorgesehen werden, dass die Phase und/oder die Periodenlänge in dem periodischen Prozesssignal verglichen werden. Vereinfacht ausgedrückt, hier wird die Veränderung der Phase und/oder der Periodenlänge innerhalb des periodischen Prozesssignals selbst bestimmt - ohne, dass ein anderweitiges Vergleichssignal, wie das vorerwähnte periodische Referenzsignal, generiert bzw. herangezogen wird. Unterstellte man nämlich, dass ein Drehschlupf plötzlich bzw. zeitkonkret im Prozess auftreten würde, so hätte dortige Periode eine längere Periodenlänge als - im periodischen Prozesssignal - vorgegangene und/oder nachfolgende Perioden.

Weiterbildend bzw. weiterführend kann dann vorgesehen sein, dass, wenn der Vergleich eine Veränderung anzeigt, auf einen Drehschlupf geschlossen wird. Weiter könnte man dann auf einen axialen Schlupf schließen - und wieder weiter auf einen Werkzeugauszug. Unter Verwendung des (Werkzeug-)Auszugsdrallwinkels könnte man so dann auch - aus dem Drehschlupf - den Werkzeugauszug quantitativ bestimmen.

Über ein entsprechendes Monitoring, insbesondere in Echtzeit, des Drehschlupfes bzw. des axialen Schlupfes und/oder des Werkzeugs lässt sich so Werkzeugauszug beispielsweise durch Anpassung der Prozessparameter verhindern. Anders ausgedrückt, wenn der ermittelte Drehschlupf einen vorgebbaren Grenzwert überschreitet, kann ein Prozess abgebrochen und/oder dessen Prozessparameter, insbesondere Schnittparameter, verändert werden - oder kann der aus dem Drehschlupf ermittelte Werkzeugauszug kompensiert werden.

Insbesondere ist es auch zweckmäßig, wenn der Vergleich des periodischen Prozesssignals mit dem periodischen Referenzsignal in einem Frequenzbereich erfolgt.

Hierbei kann auch vorgesehen werden, dass das periodische Prozesssignal und das periodische Referenzsignal unter Verwendung einer Fourier-Transformation, insbesondere einer Short-Time-Fourier-Transformation, in dem Frequenzbereich abgebildet werden.

Darüber hinaus mag es zweckmäßig sein, wenn bei dem Vergleich des periodischen Prozesssignals mit dem periodischen Referenzsignal eine Phasendifferenz zwischen dem periodischen Prozesssignal und dem periodischen Referenzsignal bestimmt wird und aus einer, insbesondere zeitlichen, Veränderung der Phasendifferenz auf den Drehschlupf geschlossen wird.

Dabei kann man auch vorsehen, dass ein Offset des periodischen Referenzsignals so initialisiert wird, dass zu einem Beginn des Vergleichs eine Phasendifferenz zwischen dem periodischen Prozesssignal und dem periodischen Referenzsignal gleich Null ist.

In besonderes zweckmäßiger Weise kann man das Verfahren einsetzen zu einer Ermittlung eines Drehschlupfes eines reibschlüssig in einem Spannfutter aufgenommenen Schaftfräsers, wobei das periodische Prozesssignal ein Spindelstrom, ein Schwingungssignal oder ein Kraftsignal ist und das dem periodischen Prozesssignal zugrundeliegende periodisch wiederkehrende Ereignis ein Zahneingriff ist.

Auch kann man das Verfahren vorteilhaft dazu einsetzen, zu einer Ermittlung eines Werkzeugauszugs eines in einem Werkzeughalter aufgenommenen Werkzeugs, insbesondere eines reibschlüssig in einem Spannfutter aufgenommenen Schaftfräsers, wobei aus dem Drehschlupf unter Verwendung eines (Werkzeug-)Auszugs-Drallwinkels der Werkzeugauszug ermittelt wird.

Die **Vorrichtung** zur Ermittlung eines Drehschlupfes eines reibschlüssig in einem Werkzeughalter aufgenommenen Werkzeugs sieht eine Auswerteeinheit vor, die derart eingerichtet ist, um das **Verfahren** zur Ermittlung eines Drehschlupfes eines reibschlüssig in einem Werkzeughalter aufgenommenen Werkzeugs, wie beschrieben, auszuführen.

Zweckmäßig ist es insbesondere, wenn die Vorrichtung in einer Werkzeugmaschine, insbesondere mit einem reibschlüssig in einem Werkzeughalter aufgenommenen Werkzeug eingesetzt wird. Hier kann es weiter zweckmäßig sein, wenn gegebenenfalls die Werkzeugmaschine, der Werkzeughalter und/oder das Werkzeug eine Sensorik aufweist, welche eingerichtet ist, um das periodische Prozesssignal zu erfassen.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen - auch zwischen den Anordnungen/Vorrichtungen und Verfahren - zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:

FIG 1a, b, c    eine Werkzeugmaschine mit einem reibschlüssig in einem Werkzeughalter aufgenommenen Werkzeug (FIG 1b - der Werkzeughalter separat; FIG 1c - das Werkzeug separat) gemäß einer erfindungsgemäßen Ausführung;

FIG 2    Darstellungen, welche eine geometrische Beziehung zwischen einem Werkzeugauszug und einer Phasenverschiebung verdeutlichen,

FIG 3    Phasenverläufe von periodischen Prozesssignalen-mit und ohne Werkzeugauszug.

**Datengetriebene Identifizierung eines Schlupfes/Werkzeugauszugs einer (rotierenden) reibkraftschlüssigen Werkzeug-Werkzeughalter-Verbindung beim Zerspanen**

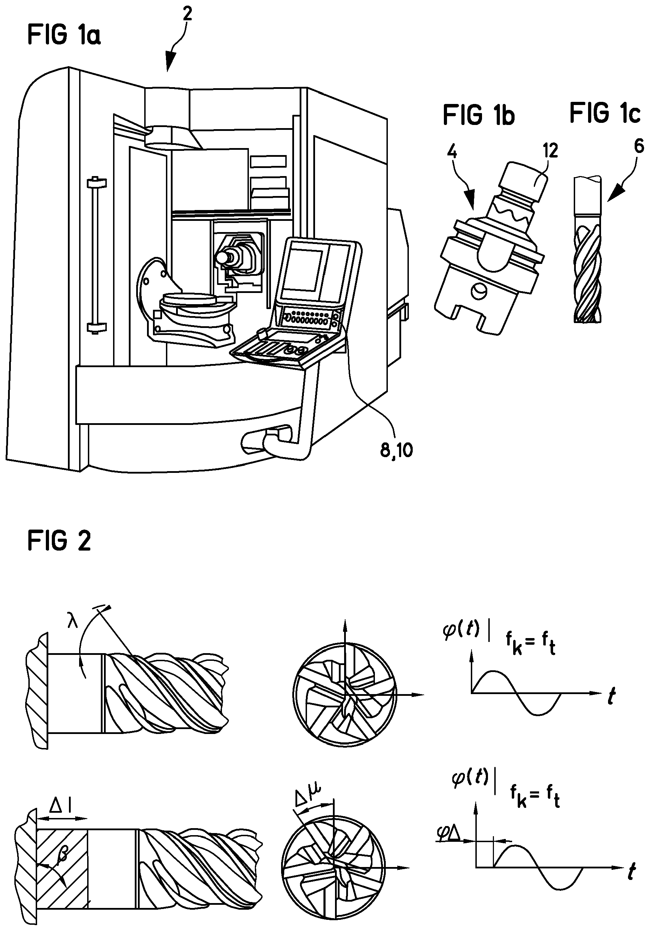

FIG 1a zeigt eine Werkzeugmaschine 2, hier eine Fräsmaschine 2, mit einem reibschlüssig in einem Werkzeughalter 4, hier in einem (in FIG 1b näher und separat dargestellten) Spannzangenfutter 4, aufgenommenen Werkzeug 6, hier ein (in FIG 1c näher und separat dargestellter) Schaftfräser 6 (mit Werkzeugschneiden N = 5 und Werkzeugdurchmesser D = 16 mm), - eingerichtet, um eine Zerspanung an einem Werkstück (nicht dargestellt), beispielsweise aus einer Titanlegierung, durchzuführen.

Die Werkzeugmaschine 2 ist ferner auch ausgestattet - mit einer entsprechenden, d.h. entsprechend eingerichteten, Auswerteeinheit 8 -, um einen Schlupf bzw. einen Werkzeugauszug bei der Zerspanung zu erfassen und zu überwachen.

Die Überwachung bzw. Identifikation des Schlupfes, d.h. des Dreh- und axialen Schlupfes, bzw. Werkzeugauszugs erfolgt dabei datengetrieben - anhand eines (bei der Zerspanung messtechnisch erfassten) (periodischen) Prozesssignals, d.h. in diesem Fall des in der internen Maschinensteuerung 10 abgreifbaren bzw. (dort als Daten vorliegenden) Spindelstroms $y_{Sp}$ der Werkzeugmaschine 2.

**Mathematische Grundlagen der Überwachung**

**Beispiel 1: Analyse über Vergleich Prozesssignal - (künstlich generiertes) Referenzsignal**

Im Rahmen eines Pre-Processings (Datenvorverarbeitung) wird zuerst der Trend des periodischen Verlaufs im Prozesssignal bzw. im Spindelstrom $y_{Sp}$ eliminiert. Anschließend wird das Prozesssignal standardisiert, sodass ein weitestgehend Prozessparameter-unabhängiger Amplitudenverlauf vorliegt.

Ein - mit dem Prozesssignal zu vergleichendes - Referenzsignal $y_{ref}(t)$ kann aus den bekannten Prozessparametern - Schnittgeschwindigkeit $vc$, Werkzeugdurchmesser $D$ und Anzahl der Werkzeugschneiden $N$ - (künstlich) generiert werden.

Nach Hinzunahme der Hilfsgrößen Drehzahl **n** (n = $v_C$ / $\pi$*D) und Zahneingriffsfrequenz $f_{Zahn}$ ($f_{zahn}$ = N * n) ergibt sich für das Referenzsignal $y_{ref}(t)$ ein einfacher Sinusverlauf:

$$y_{ref}(t) = \sin(2\pi \cdot f_{Zahn} \cdot t + \varphi_{ref,0})$$

Hierbei wird der Offset $\varphi_{ref,0}$ zunächst so initialisiert, dass die Phasendifferenz $\varphi_{diff}$ zwischen dem Referenzsignal $\varphi_{ref}$ und dem Prozesssignal bzw. dem Spindelstrom $\varphi_{Sp}$ zu Beginn des Überwachungszeitraums gleich Null ist.

Ist die Erzeugung des künstlichen Referenzsignals erfolgt, so kann schlussendlich auf die Phasendifferenz $\varphi_{diff}(t)$ geschlossen werden: Nun werden die Signale über den gesamten Zeitraum (eines zu überwachenden Prozesses) mittels Short-Time-Fouriertransformation im Zeit-Frequenz-Bereich abgebildet und dann anhand der Zahneingriffsfrequenz verglichen:

$$\varphi_{diff}(t) = \varphi_{ref}(t) - \varphi_{Sp}(t)$$

Führt ein Schlupf bzw. ein Dreh- und ein axialer Schlupf sowie ein sich erhöhender Werkzeugauszug zu einer höheren Phasenverschiebung und Phasendifferenz, so kann anhand der Phasendifferenz (, wie exemplarisch für (Versuch-)Prozesse folgend dargestellt) der Schlupf bzw. der Werkzeugauszug bei der Zerspanung identifiziert und überwacht werden.

Einstellbare max. zulässige Phasendifferenzen (entsprechend max. zulässiger Schlupfe bzw. max. zulässiger Werkzeugauszüge) können in der internen Maschinensteuerung 10 hinterlegt werden - und (bei Echtzeitüberwachung) zum automatischen Abschalten der Werkzeugmaschine 2 führen.

**Beispiel 2: Analyse des Prozesssignals**

Ein alternativer Ansatz geht von Zeitreihendaten mit einer Signalgröße von **N** aus, die ein **k**-Vielfaches der während einer Spindelumdrehung erfassten Datenpunkte ist.

Nach Gl. (1) kann dies durch Multiplikation der Anzahl der **k**-Drehungen mit dem Verhältnis von Abtastfrequenz $f_s$ und Drehfrequenz **frot** berechnet werden.

$$N = k \cdot \frac{f_s}{f_{rot}}$$

Gl. (1)

Als Voraussetzung muss dieses Signal empfindlich genug sein, um den periodischen Zahneingriff zu erkennen. Die Empfindlichkeit kann anhand des Signal-Rausch-Verhältnisses der Signalamplitude bei der Zahneingriffsfrequenz quantifiziert werden, das mindestens größer als 0 dB sein muss.

Die Zahneingriffsfrequenz $f_t$ kann als ein **nt** -Vielfaches der Drehfrequenz $f_{rot}$ beschrieben werden, wobei **nt** die Anzahl der Schneidkanten ist.

$$f_t = n_t \cdot f_{rot}$$

Gl. (2)

Zunächst wird das Zeitreihensignal in den Spektralbereich transformiert, um eine bessere Darstellung der Signalamplitude bei der Zahneingriffsfrequenz zu gewährleisten. Für ein gegebenes diskretes Zeitbereichssignal $y_n$ ist die diskrete Fourier-Transformation wie folgt definiert:

$$Y(f_k) = \sum_{n=0}^{N-1} y_n \cdot e^{-\frac{i2\pi}{N} f_k \cdot n}$$

Gl. (3)

Das transformierte Frequenzbereichssignal $Y(f_k)$ besteht nun aus komplexen Datenpunkten, die in ihren Betrag und ihre Phase zerlegt werden können:

$$Y(f_k) = \mathrm{Re}\{Y(f_k)\} + i \cdot \mathrm{Im}\{Y(f_k)\}$$

Gl. (4)

mit

$$\hat{y}(f_k) = |Y(f_k)| = \sqrt{\mathrm{Re}\{Y(f_k)\}^2 + \mathrm{Im}\{Y(f_k)\}^2}$$

Gl. (5)

und

$$\varphi(f_k) = \arg(Y(f_k)) = \tan^{-1}\frac{\mathrm{Re}\{Y(f_k)\}}{\mathrm{Im}\{Y(f_k)\}}$$

Gl. (6)

Gl. (5) und Gl. (6) mit $\hat{y}$ und $\varphi$ werden als Amplitudenspektrum bzw. Phasenspektrum bezeichnet. Die Signalgröße bei der Zahneingriffsfrequenz $y(f = f_t)$ wird als Maß für die Signalempfindlichkeit in Bezug auf den Zahneingriff betrachtet, während $\varphi(f = f_t)$ das primäre Maß für die Erkennung des Werkzeugdrehschlupfes bzw. -auszuges darstellt.

Daher wird die Phasendifferenz zwischen der aktuellen Phase des letzten erhaltenen Datenpakets $\varphi_i$ und der Phase des ersten erhaltenen Datenpakets $\varphi_0$ kontinuierlich berechnet, um die Verdrehung während des Prozesses zu quantifizieren.

$$\Delta\varphi = |\varphi_i - \varphi_0|$$

Gl. (7)

Das Verhältnis $\Delta\varphi/n_t$ zwischen der Phasendifferenz $\Delta\varphi$ und der Anzahl der Schneiden $n_t$ beschreibt die Winkelverschiebung der Relativdrehung zwischen Werkzeug und Werkzeughalter (Umfangswinkel, Drehschlupf).

Um jedoch den neuen Werkzeugversatz zu erhalten, der mit der relativen Axialbewegung korreliert ist, müssen weitere Berechnungen durchgeführt werden.

Daher wird der Umfangswinkel der Drehbewegung zunächst in die Bogenlänge $\Delta u$ umgerechnet, wie in FIG 2 dargestellt, die wiederum vom Werkzeugdurchmesser Dt abhängt:

$$\Delta u = \frac{\Delta\varphi}{n_t} \cdot \frac{\pi}{360°} \cdot D_t$$

Gl. (8)

Als nächstes wird $\beta$ - wie in FIG 2 verdeutlicht - als (Werkzeug-)Auszugsdrallwinkel $\beta$ der schraubenförmigen Bewegung beim Werkzeugauszug eingeführt. Daraus lässt sich die relative axiale Werkzeugverschiebung wie folgt bestimmen:

$$\Delta l = \frac{\Delta u}{\tan\beta}$$

Gl. (9)

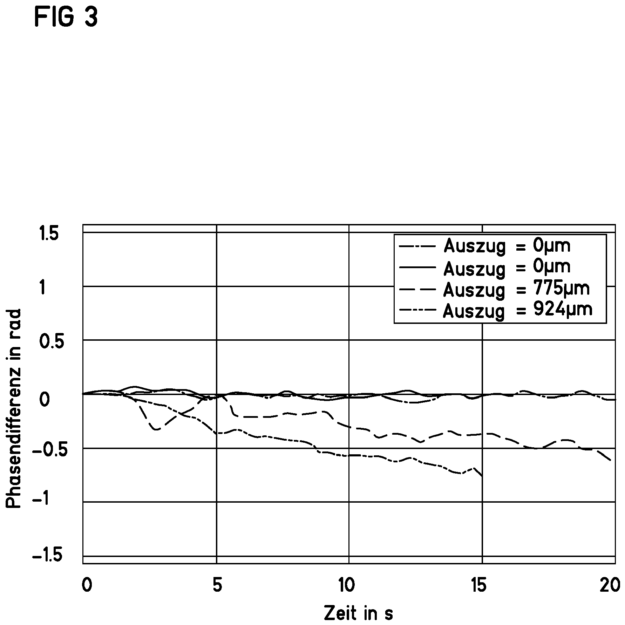

**Verifizierung der Überwaschung anhand Versuchsprozessen (bgl.Tablle 1 und FIG3)**

Das Prozesssignal - für zu die überwachenden Prozesse - stammt aus Fräsversuchen an der Werkzeugmaschine 2 bei Bearbeitung des Werkstücks 6 durch Gleichlauffräsen.

Über die Überwurfmutter 12 wurde das Werkzeug 6 mittels eines Drehmomentschlüssels in der Werkzeugaufnahme 4 fixiert (bei Versuchen (a) mit einem höheren Anzugsmoment (hier 136 Nm) und (b) mit einem niedrigeren Anzugsmoment (hier 56 - 80 Nm)), wodurch das Werkzeug 6 - einmal mehr (bei (a)) und einmal weniger (bei (b)) - reibkraftschlüssig in dem Werkzeughalter 4 aufgenommen wurde.

Die unterschiedlichen Anzugsmomente der Überwurfmutter 12 (nach (a) und (b)) führen wiederum zu einer unterschiedlich ausgebildeten Pressfuge zwischen Werkzeug 6 und Werkzeugaufnahme 4. Ein reduziertes Anzugsmoment, wie nach den Versuchen (b), führt zu schwach ausgeprägtem Pressfugendruck und somit zu einer schlupf- und auszugsanfälligen Bauteilverbindung.

Die Schnittparameter - Zahnvorschub $f_z$ (vgl. Tabelle 1, dort in den Spalten), sowie radialer Arbeitseingriff $a_e$ (vgl. Tabelle 1, dort in Zeilen) dargestellt - sind anhand von Vorversuchen so gewählt, dass Auszug kontrolliert verhindert oder zugelassen werden kann.

Nach jedem Versuch wird die Werkzeuglänge des Werkzeugs 6 mittels eines Lasersensors gemessen (nicht dargestellt). Durch ein Referenzieren auf die Anfangslänge (vor Versuch) kann letztendlich vorliegender Werkzeugauszug bestimmt werden. Dieser ist jeweils in den Zellen der Tabelle 1 eingetragen.

Tabelle 1 zeigt so eine Übersicht der durchgeführten Auszugsversuche (a) und (b) an der Werkzeugmaschine 2. Die Schnittgeschwindigkeit $v_c$ und der axiale Arbeitseingriff $a_p$ blieben jeweils mit 80 m/min und 45 mm unverändert.

Tabelle 1:

| Werkzeugauszug in axialer Richtung | | Zahnvorschub $f_z$ in mm | |
| --- | --- | --- | --- |
| | | 0,06 | 0,08 |
| Radialer Arbeitseingriff | 1 | **0 $\mu$m** | **0 $\mu$m** |
| **$a_e$ in mm** | **1,5** | **0 $\mu$m** | **0 $\mu$m** |
| (a) Anzugsmoment der Überwurfmutter: 136 Nm (maximal) | | | |
| Werkzeugauszug in axialer Richtung | | Zahnvorschub $f_z$ in mm | |
| | | 0,06 | 0,08 |
| Radialer Arbeitseingriff $a_e$ in mm | 1 | **775 $\mu$m** | **924 $\mu$m** |
| | 1,5 | 1025 $\mu$m | - |
| (b) Anzugsmoment der Überwurfmutter: 56-80 Nm (reduziert) | | | |

In FIG 3 sind musterhaft die in Tabelle 1 (fett) hervorgehobenen Phasendifferenzverläufe, ermittelt aus Spindelstromdaten der maschineninternen Steuerungsdaten der interne Maschinensteuerung 8, während des jeweiligen linearen Fräsvorgangs dargestellt.

Es ist aus FIG 3 erkennbar, dass die Verläufe der Phasendifferenz ohne Werkzeugauszug (Auszug = 0 $\mu$m) konstant bleiben, während die Phasendifferenz-Verläufe mit Werkzeugauszug (Auszug = 775 $\mu$m und Auszug = 924 $\mu$m) einen abfallenden Trend aufweisen.

D.h., es konnte verifiziert werden, dass ein erhöhter Werkzeugauszug zu einer höheren Phasenverschiebung führt. Dieser kausale Zusammenhang wurde statistisch durch Wiederholversuche abgesichert.

Der datengetriebene Ansatz erspart bei der Erkennung bzw. Vermeidung oder Kompensation des Werkzeugauszugs kostspielige Konstruktivmaßnahmen und bietet eine universellere Lösung an, denn es ist eine prozessparameterunabhängige Überwachung bzw. Kontrolle möglich.

Die Anforderungen an die Umsetzung sind niedrig, es muss lediglich ein periodisches Prozesssignal, wie hier der Spindelstrom, erfasst werden, anhand dessen die Zahneingriffsfrequenz erkennbar ist.

Versuche (mit dem Spindelstrom) haben gezeigt, dass dafür sogar, falls vorhanden, maschineninterne Daten ausreichen und keine zusätzliche Messvorrichtung erforderlich ist.

Außerdem ist die analytische Methode stabil gegen Störungen und Rauschen, weil diese Signalanteile durch einen Bandpass gefiltert werden. Aufgrund der Echtzeitfähigkeit ist potenziell eine vollständige Auszugskompensation denkbar.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

**Bezugszeichenliste:**

| | |
|---|---|
| 2 | Werkzeugmaschine |
| 4 | Werkzeughalter, Spannfutter, Spannzangenfutter |
| 6 | Werkzeug, Fräswerkzeug, Schaftfräser |
| 8 | Auswerteinheit |
| 10 | interne Maschinensteuerung |
| 12 | Überwurfmutter |

**Patentansprüche**

1. Verfahren zur Ermittlung eines Drehschlupfes eines reibschlüssig in einem Werkzeughalter 4 aufgenommenen Werkzeugs 6,

   **dadurch gekennzeichnet, dass**

   durch Auswertung einer Phase und/oder einer Periodenlänge eines periodischen Prozesssignals des Werkzeugs 6 ein Drehschlupf eines reibschlüssig in dem Werkzeughalter 4 aufgenommenen Werkzeugs 6 ermittelt wird.

2. Verfahren zur Ermittlung eines Drehschlupfes eines reibschlüssig in einem Werkzeughalter 4 aufgenommenen Werkzeugs 6 nach einem der voranstehenden Ansprüche,

   **dadurch gekennzeichnet, dass**

   das periodische Prozesssignal ein elektrisches Signal, bevorzugt ein Spindelstrom, ein Kraftsignal, ein Beschleunigungssignal, ein optisches Signal, ein akustisches Signal und/oder ein Schwingungssignal ist.

3. Verfahren zur Ermittlung eines Drehschlupfes eines reibschlüssig in einem Werkzeughalter 4 aufgenommenen Werkzeugs 6 nach einem der voranstehenden Ansprüche,

   **dadurch gekennzeichnet, dass**

   das Werkzeug 6 ein Zerspanwerkzeug, insbesondere ein Fräswerkzeug, ein Drehwerkzeug, ein Schleifwerkzeug oder ein Bohrwerkzeug, insbesondere ein Schaftfräser, und/oder der Werkzeughalter ein Spannfutter, insbesondere ein Schrumpffutter, ein Spannzangenfutter, oder ein Hydrodehnspannfutter ist.

4. Verfahren zur Ermittlung eines Drehschlupfes eines reibschlüssig in einem Werkzeughalter 4 aufgenommenen Werkzeugs 6 nach einem der voranstehenden Ansprüche,

   **dadurch gekennzeichnet, dass**

   das periodische Prozesssignal gefiltert, geglättet, standardisiert und/oder ein Trend des periodischen Prozesssignals eliminiert wird.

5. Verfahren zur Ermittlung eines Drehschlupfes eines reibschlüssig in einem Werkzeughalter 4 aufgenommenen Werkzeugs 6 nach einem der voranstehenden Ansprüche,

   **dadurch gekennzeichnet, dass**

   das periodische Prozesssignal mit einem, insbesondere künstlich erzeugten, periodischen Referenzsignal verglichen wird, wobei insbesondere ein in dem periodischen Prozesssignal periodisch wiederkehrendes Ereignis auch als das periodisch wiederkehrende Ereignis in das, insbesondere künstlich erzeugte, periodische Referenzsignal eingerechnet wird, und/oder dass die Phase und/oder die Periodenlänge in dem periodischen Prozesssignal und/oder das periodische Referenzsignal verglichen werden.

6. Verfahren zur Ermittlung eines Drehschlupfes eines reibschlüssig in einem Werkzeughalter 4 aufgenommenen Werkzeugs 6 nach dem voranstehenden Anspruch,

   **dadurch gekennzeichnet, dass**

   wenn der Vergleich über die Zeit eine Veränderung anzeigt, auf einen Drehschlupf geschlossen wird.

7. Verfahren zur Ermittlung eines Drehschlupfes eines reibschlüssig in einem Werkzeughalter 4 aufgenommenen Werkzeugs 6 nach einem der voranstehenden Ansprüche 5 oder 6,

**dadurch gekennzeichnet, dass**

der Vergleich des periodischen Prozesssignals mit dem periodischen Referenzsignal in einem Frequenzbereich erfolgt, insbesondere wobei das periodische Prozesssignal und das periodische Referenzsignal unter Verwendung einer Fourier-Transformation, insbesondere einer Short-Time-Fourier-Transformation, in dem Frequenzbereich abgebildet werden.

8. Verfahren zur Ermittlung eines Drehschlupfes eines reibschlüssig in einem Werkzeughalter 4 aufgenommenen Werkzeugs 6 nach einem der voranstehenden Ansprüche 5 bis 7,
   **dadurch gekennzeichnet, dass**
   bei dem Vergleich des periodischen Prozesssignals mit dem periodischen Referenzsignal eine Phasendifferenz zwischen dem periodischen Prozesssignal und dem periodischen Referenzsignal bestimmt wird und aus einer, insbesondere zeitlichen, Veränderung der Phasendifferenz auf den Drehschlupf geschlossen wird.

9. Verfahren zur Ermittlung eines Drehschlupfes eines reibschlüssig in einem Werkzeughalter 4 aufgenommenen Werkzeugs 6 nach einem der voranstehenden Ansprüche 5 bis 8,
   **dadurch gekennzeichnet, dass**
   ein Offset des periodischen Referenzsignals so initialisiert wird, dass zu einem Beginn des Vergleichs eine Phasendifferenz zwischen dem periodischen Prozesssignal und dem periodischen Referenzsignal gleich Null ist.

10. Verfahren zur Ermittlung eines Drehschlupfes eines reibschlüssig in einem Werkzeughalter 4 aufgenommenen Werkzeugs 6 nach einem der voranstehenden Ansprüche,
    **eingesetzt zu**
    einer Ermittlung eines Drehschlupfes eines reibschlüssig in einem Spannfutter 4 aufgenommenen Schaftfräsers 6, wobei das periodische Prozesssignal ein Spindelstrom oder ein Kraftsignal oder ein Schwingungssignal ist und das dem periodischen Prozesssignal zugrundeliegende periodisch wiederkehrende Ereignis ein Zahneingriff ist.

11. Verfahren zur Ermittlung eines Drehschlupfes eines reibschlüssig in einem Werkzeughalter 4 aufgenommenen Werkzeugs 6 nach einem der voranstehenden Ansprüche,
    **eingesetzt zu**
    einer Ermittlung eines Werkzeugauszugs eines in einem Werkzeughalter 4 aufgenommenen Werkzeugs 6, insbesondere eines reibschlüssig in einem Spannfutter 4 aufgenommenen Schaftfräsers 6, wobei aus dem Drehschlupf unter Verwendung eines (Werkzeug-)Auszugsdrallwinkels der Werkzeugauszug ermittelt wird.

12. Verfahren zur Ermittlung eines Drehschlupfes eines reibschlüssig in einem Werkzeughalter 4 aufgenommenen Werkzeugs 6 nach einem der voranstehenden Ansprüche,
    **dadurch gekennzeichnet, dass**
    wenn der ermittelte Drehschlupf einen vorgebbaren Grenzwert überschreitet, ein Prozess abgebrochen und/oder dessen Prozessparameter, insbesondere Schnittparameter, verändert werden oder der aus dem Drehschlupf ermittelte Werkzeugauszug kompensiert wird.

13. Vorrichtung zur Ermittlung eines Drehschlupfes eines reibschlüssig in einem Werkzeughalter 4 aufgenommenen Werkzeugs 6
    **gekennzeichnet durch**
    eine Auswerteeinheit, die derart eingerichtet ist, um das Verfahren zur Ermittlung eines Drehschlupfes eines reibschlüssig in einem Werkzeughalter aufgenommenen Werkzeugs nach einem der voranstehenden Verfahrensansprüche auszuführen.

14. Vorrichtung zur Ermittlung eines Drehschlupfes eines reibschlüssig in einem Werkzeughalter 4 aufgenommenen Werkzeugs 6 nach einem der voranstehenden Vorrichtungsansprüche
    **eingesetzt**
    in einer Werkzeugmaschine 2, insbesondere mit einem reibschlüssig in einem Werkzeughalter 4 aufgenommenen Werkzeug 6, wobei gegebenenfalls die Werkzeugmaschine 2, der Werkzeughalter 4 und/oder das Werkzeug 6 eine Sensorik aufweist, welche eingerichtet ist, um das periodische Prozesssignal zu erfassen.

**FIG 1a**

2

**FIG 1b**     **FIG 1c**

4          12          6

8,10

**FIG 2**

λ

$\varphi(t)$ | $f_k = f_t$

$t$

$\Delta l$

$\Delta \mu$

β

$\varphi(t)$ | $f_k = f_t$

$\varphi\Delta$

$t$

FIG 3

Europäisches
Patentamt

European
Patent Office

Office européen
des brevets

# EUROPÄISCHER RECHERCHENBERICHT

Nummer der Anmeldung

EP 23 21 4162

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 184 237 A1 (SANDVIK INTELLECTUAL PROPERTY [SE]) 28. Juni 2017 (2017-06-28) * Absätze [0033], [0065], [0066]; Abbildungen 1,2 * | 1-3,6, 13,14 | INV. B23B31/117 B23Q17/09 |
| X | DE 10 2005 059122 A1 (LUK LAMELLEN & KUPPLUNGSBAU [DE]) 13. Juli 2006 (2006-07-13) * Absatz [0028] - Absatz [0036] * | 1-14 | |
| X | WO 2020/193228 A1 (REISHAUER AG [CH]) 1. Oktober 2020 (2020-10-01) * Seite 9 - Seite 10; Abbildungen 1,2,6-13 * * Seite 18 - Seite 24 * | 1-14 | |
| A | ROMEO ROCCO A. ET AL: "Methods and Sensors for Slip Detection in Robotics: A Survey", IEEE ACCESS, Bd. 8, 1. Januar 2020 (2020-01-01), Seiten 73027-73050, XP055823443, USA ISSN: 2169-3536, DOI: 10.1109/ACCESS.2020.2987849 | 1-14 | RECHERCHIERTE SACHGEBIETE (IPC) B23B B23Q |

Der vorliegende Recherchenbericht wurde für alle Patentansprüche erstellt

| Recherchenort | Abschlußdatum der Recherche | Prüfer |
|---|---|---|
| Den Haag | 15. Mai 2024 | Prelovac, Jovanka |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                     EP 23 21 4162

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-05-2024

| Im Recherchenbericht angeführtes Patentdokument | Datum der Veröffentlichung | Mitglied(er) der Patentfamilie | Datum der Veröffentlichung |
|---|---|---|---|
| EP 3184237 A1 | 28-06-2017 | CA 3008741 A1 | 29-06-2017 |
| | | CN 108430696 A | 21-08-2018 |
| | | EP 3184237 A1 | 28-06-2017 |
| | | JP 7036726 B2 | 15-03-2022 |
| | | JP 2019507021 A | 14-03-2019 |
| | | RU 2018126634 A | 23-01-2020 |
| | | US 2019001456 A1 | 03-01-2019 |
| | | WO 2017108731 A1 | 29-06-2017 |
| DE 102005059122 A1 | 13-07-2006 | KEINE | |
| WO 2020193228 A1 | 01-10-2020 | CH 715989 A1 | 30-09-2020 |
| | | CN 113613820 A | 05-11-2021 |
| | | EP 3941673 A1 | 26-01-2022 |
| | | JP 2022525521 A | 17-05-2022 |
| | | KR 20210139353 A | 22-11-2021 |
| | | PL 3941673 T3 | 09-10-2023 |
| | | TW 202039155 A | 01-11-2020 |
| | | US 2022134459 A1 | 05-05-2022 |
| | | WO 2020193228 A1 | 01-10-2020 |

EPO FORM P0461

Für nähere Einzelheiten zu diesem Anhang : siehe Amtsblatt des Europäischen Patentamts, Nr.12/82